# EUROPÄISCHE PATENTSCHRIFT

(11) **EP 4 065 332 B1**
(45) Veröffentlichungstag und Bekanntmachung des Hinweises auf die Patenterteilung: **01.11.2023**
(21) Anmeldenummer: 20829181.5
(22) Anmeldetag: 26.11.2020
(51) Int. Cl.: B29C 41/28, F16G 1/20, B21D 53/14

(54) **VERWENDUNG EINES ENDLOSBANDES ALS TRÄGERBAND ODER PROZESSBAND**
A USE OF AN ENDLESS BELT AS CARRIER BELT OR PROCESS BELT
UTILISATION D'UNE BANDE SANS FIN EN TANT QUE BANDE DE SUPPORT OU BANDE DE PROCESSUS

(30) Priorität: 27.11.2019 AT 510332019
(43) Veröffentlichungstag der Anmeldung: 05.10.2022
(73) Patentinhaber: Berndorf Band GmbH, 2560 Berndorf (AT)
(72) Erfinder: SIMMEL, Johannes Günther, 7201 Neudörfl (AT)
(74) Vertreter: Burger, Hannes
(86) Internationale Anmeldenummer: PCT/AT2020/060420
(87) Internationale Veröffentlichungsnummer: WO 2021/102497

(56) Entgegenhaltungen:
- EP-A1- 0 031 613
- EP-A1- 1 034 876
- EP-B1- 0 031 613
- EP-B1- 1 034 876
- WO-A1-2016/187630
- US-A- 3 728 066
- SANDVIK: "Seamless steel belt", INTERNET CITATION, 8. Mai 2012 (2012-05-08), Seiten 1-2, XP002734332, Gefunden im Internet: URL:http://www.processsystems.sandvik.com/ en/products/steel-belts-and-processing-sys tems/steel-belts/belt-types/seamless-steel -belt/ [gefunden am 2015-01-12]

## Beschreibung

Die Erfindung betrifft die Verwendung eines Endlosbandes aus einem Flachmaterial aus einem ersten metallischen Werkstoff, welches mittels zumindest einer Schweißnaht zu einem endlosen Bandkörper zusammengefügt ist und bei dem zumindest eine Schicht aus einem zweiten metallischen Werkstoff auf einer Bandaußenfläche vorgesehen ist, als Trägerband oder Prozessband für die Herstellung von Folienmaterial aus einem Kunststoffwerkstoff.

Die EP 0031613 A1 beschreibt ein Verfahren zum Herstellen einer Prägegravur auf einem durch eine Schweißnaht verbundenen metallischen Endlosband. Auf das Endlosband wird eine Metallschicht aufgalvanisiert. Nachdem die aufgalvanisierte Metallschicht geschliffen und poliert ist, wird eine Prägegravur mittels eines Ätzvorgangs eingearbeitet. Die Dicke der aufgalvanisierten Metallschicht des Endlosbandes ist größer gewählt als die Tiefe der Ätzgravur. Das Endlosband mit der Prägegravur dient dazu, ein aus mit einem Kunstharz getränkten Fasern aus Holz, Glas oder dergleichen zugeführtes Vorprodukt zu einem Presslaminat zu pressen. Die Ätzgravur wird als Oberflächenbehandlung in die Oberfläche des Presslaminats eingeprägt, wobei so plattenförmige Presslaminate, wie kunststoffbeschichtete Hartfaserplatten, Holzfaserplatten, Holzspanplatten oder Glasfaserplatten hergestellt werden. Die geprägten Presslaminate finden im Möbelbau oder in der Raumausstattung Verwendung und werden in zunehmendem Maße mit der in die Oberfläche eingeprägten Strukturierung versehen, deren Muster beliebig sein kann. Zu solchen Mustern gehören beispielsweise Feinstrukturierungen oder Riffelungen, Noppen, aber auch eine Strukturierung in der Art einer Holzmaserung.

Die WO 2016/187630 A1 beschreibt ein Verfahren zur Herstellung eines Endlosbandes, welches zumindest eine Schweißnaht aufweist, bei dem zumindest ein die Wärmeleitfähigkeit der Schweißnaht reduzierendes Material in die Schweißnaht eingebracht wird, oder bei dem die Wärmeleitfähigkeit zumindest in einem unmittelbar an die Schweißnaht angrenzenden Bereich des Endlosbandes durch Veränderung einer Materialzusammensetzung in und/oder eine Gefügestruktur des Endlosbandes in diesem Bereich erhöht wird.

Die US 3728066 A beschreibt Metallbänder aus flexiblem Metall hoher Härte, wobei die Bandverbindung durch Stumpfschweißen der Bandenden in einer solchen Schrägung hergestellt wird, dass die Schweißnaht in einem Winkel zur Bewegungsrichtung zum Band verläuft, Der Winkel liegt in einem Bereich zwischen 2° und 45°, vorzugsweise zwischen 2° und 15°. Die Schweißnaht wird bündig mit der Bandoberfläche geschliffen, die eine Toleranz von +/-3µm hat.

Es beschreibt auch die EP 1034876 Al ein Verfahren zur Herstellung eines mit einem Prägemuster versehenen endlosen Stahlbands zur kontinuierlichen Produktion von Presslaminaten. Das Stahlband wird seinerseits strukturiert, poliert, mattiert und hartverchromt.

Derartige Endlosbänder werden bevorzugt bei der Herstellung von Kunststofffolien eingesetzt und dienen zumeist zur Kalandrierung derselben. Ein möglicher Aspekt der Kalandrierung von Folien ist die Gestaltungsmöglichkeit der Oberfläche, wie beispielsweise das Prägen der Folien.

Es wurden bereits Endlosbänder gefertigt, deren Bandkörper vollständig aus dem metallischen Werkstoff Nickel (Ni) gebildet worden ist. Diese Endlosbänder konnten gut bearbeitet und auch deren Oberfläche mit einer Struktur und/oder mit einer hohen Oberflächenrauheit versehen werden. Nachteilig dabei ist jedoch die relativ kurze Verwendungsdauer, welche nur bis zu einem Tag betrug.

Es wurden auch Endlosbänder gefertigt, deren Bandkörper aus dem metallischen Werkstoff Stahl gebildet worden ist. Zur Bildung einer strukturierten Oberfläche des Bandkörpers, insbesondere dessen Bandaußenfläche, wurde die Oberfläche mit den unterschiedlichsten bekannten Bearbeitungsverfahren behandelt. Dies konnte z.B. mittels eines Bürstvorganges, eines Schleifvorganges oder dergleichen erfolgen. Die Oberflächenrauheit kann z.B. auch mittels unterschiedlicher Strahlverfahren oder Strahltechniken ausgebildet oder hergestellt werden. Der Oberflächen-Bearbeitungsvorgang führte zum Aufbau von nachteiligen Eigenspannungen im Werkstoff des Bandkörpers, welche in einem nachfolgenden Behandlungsvorgang abgebaut werden mussten. Diese Eigenspannungen führten in weitere Folge auch zu Verformungen des Bandkörpers. Wurde der nachfolgende Behandlungsvorgang nicht durchgeführt, konnte kein ausreichend genaues Laufverhalten des Endlosbandes erzielt werden bzw. ist das Endlosband aufgrund der Verformungen für die Verwendung nicht optimal geeignet oder überhaupt unbrauchbar. Dies war kosten- und zeitaufwändig. Darüber hinaus bildete sich die Schweißnaht des Bandkörpers zyklisch wiederkehrend nach jedem Umlauf am herzustellenden Produkt, insbesondere der Kunststofffolie, ab.

Aufgabe der vorliegenden Erfindung war es, die Nachteile des Standes der Technik zu überwinden und ein Endlosband zur Verfügung zu stellen, welches das Abbild der Schweißnaht verhindert und weiters in der Herstellung kostengünstiger ist und auch eine längere Einsatzdauer aufweist.

Diese Aufgabe wird durch die Verwendung eines Endlosbandes als Trägerband oder Prozessband für die Herstellung von Folienmaterial aus einem Kunststoffwerkstoff gemäß den Ansprüchen gelöst.

Das Endlosband ist aus einem Flachmaterial aus einem ersten metallischen Werkstoff, insbesondere aus einem Stahlwerkstoff gebildet, bei dem
- das Flachmaterial mittels zumindest einer Schweißnaht zu einem endlosen Bandkörper zusammengefügt ist,
- der Bandkörper eine Bandaußenfläche und eine Bandinnenfläche aufweist,
- die Bandaußenfläche in einer Bandstärke von der Bandinnenfläche beabstandet angeordnet ist,
- der erste metallische Werkstoff des Bandkörpers einen ersten Härtewert aufweist,
- zumindest eine Schicht aus einem zweiten metallischen Werkstoff vorgesehen ist,
- die zumindest eine metallische Schicht zumindest auf der Bandaußenfläche angeordnet ist und an der Bandaußenfläche anhaftet,
- der zweite metallische Werkstoff der zumindest einen Schicht einen zweiten Härtewert aufweist, welcher zweite Härtewert geringer ist als der erste Härtewert des Bandkörpers,
- zumindest die Schweißnaht von der zumindest einen metallischen Schicht abgedeckt ist, und
das Endlosband als Trägerband oder Prozessband für die Herstellung von Folienmaterial aus einem Kunststoffwerkstoff verwendet wird.

Der dadurch erzielte Vorteil liegt darin, dass durch das Vorsehen und Anordnen einer eigenen metallischen Schicht aus einem zweiten Werkstoff, dessen Härte geringer ist als die Härte des metallischen Werkstoffs des Bandkörpers, zumindest abschnittsweise eine eigene zu bearbeitende Schicht bereitgestellt wird. Durch das Anordnen der zumindest einen Schicht aus dem metallischen zweiten Werkstoff zumindest auf der Schweißnaht wird aber auch das Abbilden der Schweißnaht an der Oberfläche der hergestellten Folie vermieden. Da zumindest die Schweißnaht von der zumindest einen Schicht abgedeckt ist, zeichnet sich diese nicht mehr in vorbestimmten Abständen an der hergestellten Folie ab. Dies wird insbesondere auch dadurch erzielt, dass der zweite Werkstoff der Schicht eine zum Werkstoff des Bandkörpers dazu unterschiedliche Wärmeleitfähigkeit aufweist. Damit wird der Vorteil einer "unsichtbaren" Schweißnaht an der Folie erzielt.

Der Bandkörper dient als Trägerband bzw. Tragkörper, wobei die Oberfläche der zusätzlichen äußeren Schicht bevorzugt unabhängig vom Bandkörper gestaltet und auf den jeweiligen Einsatzzweck abgestimmt und ausgebildet werden kann. Bei einer nachträglichen Oberflächenbearbeitung wird zumindest der Werkstoff der zumindest einen Schicht behandelt und es erfolgt kein Aufbau von inneren Spannungen im Bandkörper selbst. Damit werden auch die ungewollten Verformungen des Bandkörpers sicher vermieden. So ist eine beliebige Oberflächenbearbeitung oder Oberflächenbehandlung zumindest an der zusätzlichen Schicht möglich, ohne dass nachträgliche Behandlungsvorgänge zum Abbau von inneren Spannungen durchgeführt werden müssen oder dass die Verformungen beseitigt, insbesondere plangerichtet, werden müssen.

Weiters lässt sich auch der eine geringere Härte aufweisende Werkstoff der zusätzlichen Schicht leichter bearbeiten, wodurch so auch Kosten und Zeit eingespart werden.

Weiters kann es vorteilhaft sein, wenn der zweite Werkstoff der metallischen Schicht aus der Gruppe von Nickel (Ni), Kupfer (Cu), Silber (Ag), Gold (Au) ausgewählt ist. Damit kann je nach Einsatzzweck des Endlosbandes der zweite Werkstoff der metallischen Schicht ausgewählt und damit der Bandkörper beschichtet werden. So wird eine hohe Variationsmöglichkeit für die verschiedensten Einsatzzwecke des Endlosbandes geschaffen.

Eine andere Ausführungsform zeichnet sich dadurch aus, dass die zumindest eine metallische Schicht vollflächig auf der Bandaußenfläche des Bandkörpers angeordnet ist. Damit kann eine durchgängige und werkstoffmäßig einheitliche Beschichtung des Bandkörpers mit der zusätzlichen, zumindest einen metallischen Schicht geschaffen werden. So kann ein ungewollter Abdruck oder ein ungewolltes Abbild der Schweißnaht auf der mit dem Endlosband herzustellenden Kunststofffolie verhindert werden. Dabei erfolgt die Oberflächenbearbeitung ausschließlich an der zumindest einen Schicht, ohne dass sich der Bandkörper beim Ausbilden oder Einbringen der Struktur oder der Oberflächenrauhigkeit verformt oder verzieht.

Vorteilhaft ist es, wenn die Härtewerte der metallischen Werkstoffe jeweils nach Martens, Rockwell, Brinell, Vickers, Shore oder Mohs angegeben sind oder angegeben werden.

Dadurch kann ein eindeutiger Vergleich der Härtewerte der unterschiedlichen, metallischen Werkstoffe durchgeführt werden.

Eine weitere mögliche Ausführungsform hat die Merkmale, dass die Bandstärke des Bandkörpers mit einem Stärkewert ausgebildet ist, der aus einem Stärke-Wertebereich stammt, dessen untere Grenze 0,10 mm, insbesondere 0,25 mm, und dessen obere Grenze 1,00 mm, bevorzugt 0,50 mm, beträgt. Damit kann für jeden Einsatzfall des Endlosbandes die dafür erforderliche Bandstärke festgelegt und ausgebildet werden. Der vorbestimmte Stärkewert der Bandstärke ist dabei unter Berücksichtigung von Fertigungstoleranzen vollflächig und gleich zueinander ausgebildet.

Eine weitere Ausbildung sieht vor, dass die Bandstärke des Bandkörpers 0,30 mm beträgt. Damit kann eine relativ hohe Flexibilität des Bandkörpers erzielt werden.

Eine andere Ausführungsform zeichnet sich dadurch aus, dass der Bandkörper mit einer Bandbreite mit einem Breitenwert ausgebildet ist, der aus einem Breiten-Wertebereich stammt, dessen untere Grenze 0,6 m und dessen obere Grenze 1,5 m beträgt. Damit kann ein großes Einsatzspektrum des Endlosbandes ermöglicht werden.

Eine weitere bevorzugte Ausführungsform ist dadurch gekennzeichnet, dass der Bandkörper mit einer Umfangslänge mit einem Umfangslängenwert ausgebildet ist, der aus einem Umfangslängen-Wertebereich stammt, dessen untere Grenze 1,0 m und dessen obere Grenze 20,0 m beträgt. Damit kann das Endlosband an die unterschiedlichsten Einsatzbedingungen und Einsatzfälle angepasst werden.

Weiters kann es vorteilhaft sein, wenn die Umfangslänge des Bandkörpers 1,25 m beträgt. Damit kann eine übliche Standardabmessung des Endlosbandes bereitgestellt werden.

Eine andere alternative Ausführungsform zeichnet sich dadurch aus, dass das Verhältnis der Umfangslänge zur Bandbreite des Bandkörpers einen Verhältniswert aufweist, der aus einem Verhältnis-Wertebereich stammt, dessen untere Grenze 1,0 und dessen obere Grenze 1,5 beträgt. Damit kann ein relativ kurzes Band bei großer Bandbreite zur Verfügung gestellt werden.

Eine weitere mögliche und gegebenenfalls alternative Ausführungsform hat die Merkmale, dass die Schichtstärke der zumindest einen metallischen Schicht mit einem Stärkewert ausgebildet ist, der aus einem Stärke-Wertebereich stammt, dessen untere Grenze 40 µm, insbesondere 50 µm, und dessen obere Grenze 80 µm, bevorzugt 60 µm, beträgt. Je nach Wahl der Schichtstärke kann so das maximale Ausmaß der einzuarbeitenden Oberflächenrauigkeit festgelegt und bestimmt werden.

Eine weitere Ausbildung sieht vor, dass zumindest eine vom Bandkörper abgewendete Oberfläche der zumindest einen metallischen Schicht mit einer gemittelte Rautiefe Rz mit einem Rautiefenwert ausgebildet ist, der aus einem Rautiefen-Wertebereich stammt, dessen untere Grenze 20 µm, insbesondere 25 µm, und dessen obere Grenze 40 µm, bevorzugt 35 µm, beträgt. Damit kann je nach Wahl der Rautiefe die herzustellende Oberflächenqualität und Oberflächengüte der Kunststofffolie festgelegt und bestimmt werden.

Eine andere Ausführungsform zeichnet sich dadurch aus, dass zumindest die Rautiefe Rz der zumindest einen metallischen Schicht 30 µm beträgt. Damit kann auch bei einer geringen Schichtstärke der metallischen Schicht stets eine vollständig durchgängige, metallische Schicht beibehalten werden.

Es ist aber auch möglich, dass zumindest die vom Bandkörper abgewendete Oberfläche der zumindest einen metallischen Schicht mit einer gemittelte Rautiefe Rz mit einem Rautiefenwert ausgebildet ist, der aus einem Rautiefen-Wertebereich stammt, dessen untere Grenze 0,02 µm, insbesondere 0,5 µm, und dessen obere Grenze 5,5 µm, bevorzugt 2,0 µm, beträgt. Mit diesen geringen Rautiefenwerten kann eine polierte und qualitativ hochwertige Oberfläche des Endlosbandes geschaffen werden.

Die Aufgabe der Erfindung wird aber unabhängig davon auch durch ein Verfahren zur Herstellung eines Endlosbandes gelöst, bei dem
- ein Flachmaterial aus einem ersten metallischen Werkstoff, insbesondere aus einem Stahlwerkstoff, mittels zumindest einer Schweißnaht zu einem endlosen Bandkörper zusammengefügt wird,
- wobei der Bandkörper eine Bandaußenfläche und eine Bandinnenfläche aufweist,
- wobei die Bandaußenfläche in einer Bandstärke von der Bandinnenfläche beabstandet angeordnet ist,
- wobei die zumindest eine Schweißnaht zumindest bis auf die Bandstärke abgetragen wird, und
- wobei der erste metallische Werkstoff des Bandkörpers einen ersten Härtewert aufweist, und dabei weiters vorgesehen ist
- dass zumindest eine Schicht aus einem zweiten metallischen Werkstoff auf der Bandaußenfläche anhaftend an dieser angeordnet wird, und
- dass der zweite metallische Werkstoff der zumindest einen Schicht mit einem zweiten Härtewert gewählt wird, welcher zweite Härtewert geringer ist als der erste Härtewert des Bandkörpers.

Der bei diesem Vorgehen erzielte Vorteil liegt darin, dass durch das Vorsehen und Anordnen einer eigenen metallischen Schicht aus einem zweiten Werkstoff, dessen Härte geringer ist als die Härte des metallischen Werkstoffs des Bandkörpers, eine eigene zu bearbeitende Schicht bereitgestellt wird. Durch das Anordnen der zumindest einen Schicht aus dem metallischen zweiten Werkstoff zumindest auf der Schweißnaht wird aber auch das Abbilden der Schweißnaht an der Oberfläche der hergestellten Folie vermieden. Da zumindest die Schweißnaht von der zumindest einen Schicht abgedeckt ist, zeichnet sich diese nicht mehr in vorbestimmten Abständen an der hergestellten Folie ab. Dies wird insbesondere auch dadurch erzielt, dass der zweite Werkstoff der Schicht eine zum Werkstoff des Bandkörpers dazu unterschiedliche Wärmeleitfähigkeit aufweist. Damit wird der Vorteil einer "unsichtbaren" Schweißnaht an der Folie erzielt.

Der Bandkörper dient für die Schicht aus dem zweiten Werkstoff als Trägerband bzw. Tragkörper, wobei die Oberfläche der zusätzlichen äußeren Schicht unabhängig vom Bandkörper gestaltet und auf den jeweiligen Einsatzzweck abgestimmt und ausgebildet werden kann. Bei einer nachträglichen Oberflächenbearbeitung wird nur der Werkstoff der zumindest einen Schicht behandelt und es erfolgt kein Aufbau von inneren Spannungen im Bandkörper selbst. So ist eine beliebige Oberflächenbearbeitung oder Oberflächenbehandlung an der zusätzlichen Schicht möglich, ohne dass nachträgliche Behandlungsvorgänge zum Abbau von inneren Spannungen durchgeführt werden müssen. Weiters lässt sich auch der eine geringere Härte aufweisende Werkstoff der zusätzlichen Schicht leichter bearbeiten, wodurch so auch Kosten und Zeit eingespart werden.

Weiters ist ein Vorgehen vorteilhaft, bei dem der zweite Werkstoff der metallischen Schicht aus der Gruppe von Nickel (Ni), Kupfer (Cu), Silber (Ag), Gold (Au) ausgewählt wird. Damit kann je nach Einsatzzweck des Endlosbandes der zweite Werkstoff der metallischen Schicht ausgewählt und damit der Bandkörper beschichtet werden. So wird eine hohe Variationsmöglichkeit für die verschiedensten Einsatzzwecke des Endlosbandes geschaffen.

Eine weitere vorteilhafte Vorgehensweise ist dadurch gekennzeichnet, dass die Schichtstärke der zumindest einen metallischen Schicht mit einem Stärkewert ausgebildet wird, der aus einem Stärke-Wertebereich stammt, dessen untere Grenze 40 µm, insbesondere 50 µm, und dessen obere Grenze 80 µm, bevorzugt 60 µm, beträgt. Je nach Wahl der Schichtstärke kann so das maximale Ausmaß der einzuarbeitenden Oberflächenrauigkeit festgelegt und bestimmt werden.

Vorteilhaft ist auch eine Verfahrensvariante, bei welcher zumindest die vom Bandkörper abgewendete Oberfläche der zumindest einen metallischen Schicht mit der gemittelte Rautiefe Rz mit einem Rautiefenwert ausgebildet wird, der aus einem Rautiefen-Wertebereich stammt, dessen untere Grenze 20 µm, insbesondere 25 µm, und dessen obere Grenze 40 µm, bevorzugt 35 µm, beträgt. Damit kann je nach Wahl der Rautiefe die herzustellende Oberflächenqualität und Oberflächengüte der Kunststofffolie festgelegt und bestimmt werden.

Es kann weiters ist ein Vorgehen vorteilhaft sein, bei welchem zumindest die Oberfläche der zumindest einen metallischen Schicht mit der Rautiefe Rz von 30 µm ausgebildet wird. Damit kann auch bei einer geringen Schichtstärke der metallischen Schicht stets eine vollständig durchgängige, metallische Schicht beibehalten werden.

Eine weitere alternative Vorgehensweise ist dadurch gekennzeichnet, dass zumindest die vom Bandkörper abgewendete Oberfläche der zumindest einen metallischen Schicht mit einer gemittelte Rautiefe Rz mit einem Rautiefenwert ausgebildet ist, der aus einem Rautiefen-Wertebereich stammt, dessen untere Grenze 0,02 µm, insbesondere 0,5 µm, und dessen obere Grenze 5,5 µm, bevorzugt 2,0 µm, beträgt. Mit diesen geringen Rautiefenwerten kann eine polierte und qualitativ hochwertige Oberfläche des Endlosbandes geschaffen werden.

Schließlich kann weiters ist ein Vorgehen vorteilhaft sein, bei dem nach dem Abtragen der zumindest einen Schweißnaht und vor dem Anordnen oder Aufbringen der zumindest einen

Schicht aus dem zweiten metallischen Werkstoff eine Ausgleichsschicht aus demselben zweiten metallischen Werkstoff wie die zumindest eine Schicht auf der verbliebenen Schweißnaht aufgebracht und gegebenenfalls ebenflächig bezüglich der beidseits der Schweißnaht befindlichen Bandaußenflächen ausgebildet wird. Durch diese Maßnahme kann eine noch ebenflächigere Ausbildung der Oberfläche, nämlich der Bandaußenfläche, im Zusammenwirken mit der zusätzlich auf den Bandkörper aufgebrachten, zumindest einen Schicht aus dem zweiten metallischen Werkstoff erzielt werden.

Zum besseren Verständnis der Erfindung wird diese anhand der nachfolgenden Figuren näher erläutert.

Es zeigen jeweils in stark vereinfachter, schematischer Darstellung:
- Fig. 1: eine mögliche Ausbildung eines Endlosbandes, in schaubildlicher Darstellung, teilweise geschnitten;
- Fig. 2: einen Querschnitt durch die zumindest eine Schweißnaht des Endlosbandes nach Fig. 1;
- Fig. 3: ein mögliches Anwendungsbeispiel des Endlosbandes zur Herstellung einer Kunststofffolie, in Ansicht und stark stilisierter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

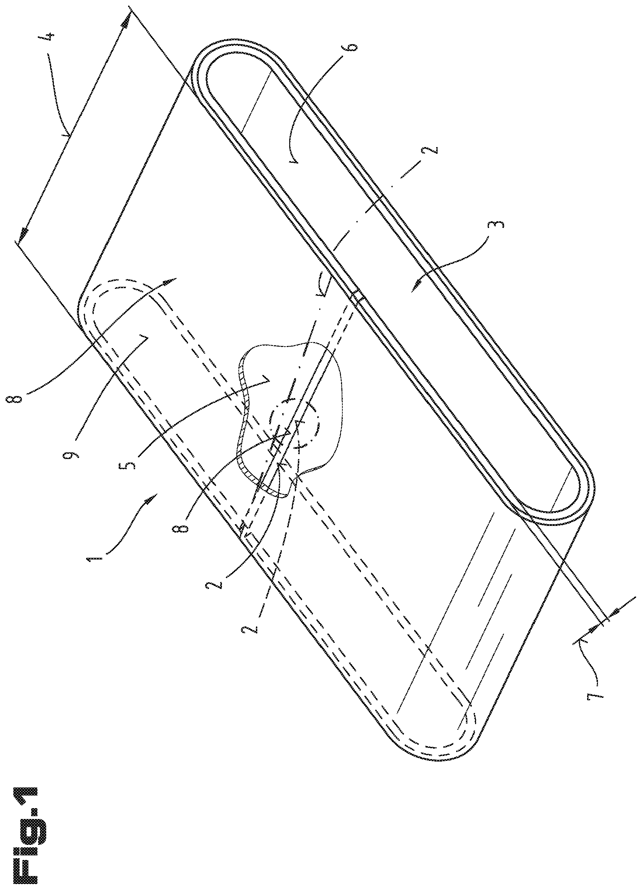

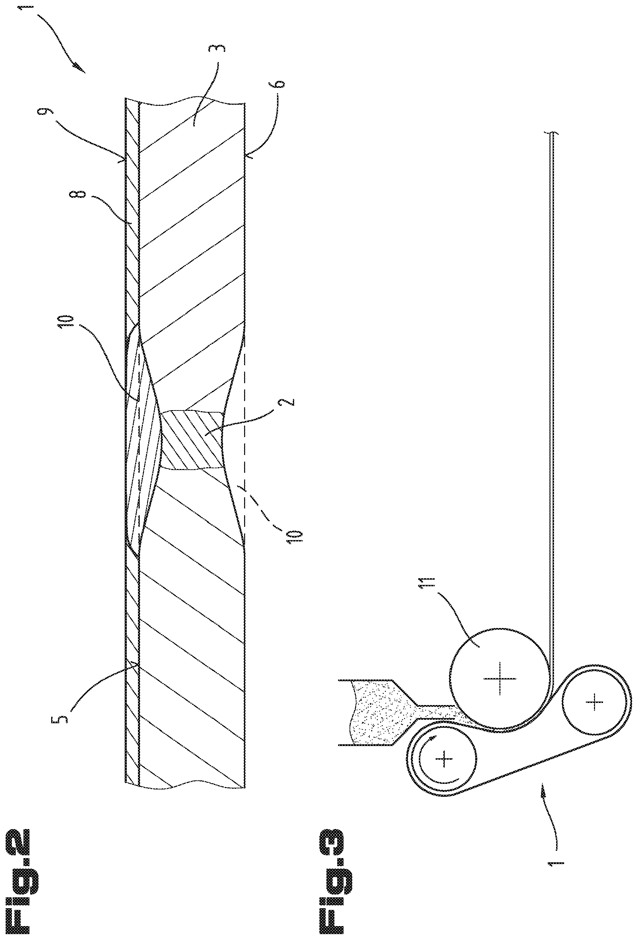

In den Fig. 1 und 2 ist schematisch vereinfacht ein Endlosband 1 gezeigt, welches aus einem Flachmaterial aus einem ersten metallischen Werkstoff gebildet worden ist. Der erste metallische Werkstoff des Bandkörpers 3 weist einen ersten Härtewert auf. Als metallischer Werkstoff wird bevorzugt ein Stahlwerkstoff gewählt.

Das Flachmaterial ist bzw. wird mittels zumindest einer Schweißnaht 2 zu einem endlosen Bandkörper 3 zusammengefügt. Je nach gewähltem Flachmaterial kann dies z.B. mit einer Stirnschweißung erfolgen, bei welcher einander zugewendete Querstirnseiten des Flachmaterials miteinander stumpf verschweißt werden. Eine derartige Ausbildung der Schweißnaht 2 ist bei diesem Ausführungsbeispiel dargestellt. Der Längsverlauf der Schweißnaht 2 kann z.B. eine normale Ausrichtung bezüglich der Längserstreckung des Bandkörpers 3 oder aber auch eine schräg dazu verlaufende Ausrichtung aufweisen. Der schräge Längsverlauf ist in strichpunktierten Linien angedeutet.

Das Flachmaterial könnte aber auch helixförmig angeordnet werden, wobei dann die zumindest Schweißnaht 2 ebenfalls einen helixförmigen Verlauf aufweist.

In dem gefügten und miteinander verbundenen Zustand des Flachmaterials weist der Bandkörper 3 eine Bandbreite 4 auf. Weiters definiert bzw. bildet der Bandkörper 3 eine Bandaußenfläche 5 und eine Bandinnenfläche 6, wobei die Bandaußenfläche 5 in einer Bandstärke 7 von der Bandinnenfläche 6 beabstandet angeordnet ist. Die Bandstärke 7 ist bevorzugt über die gesamte Umfangslänge sowie die gesamte Bandbreite 4 konstant gleich ausgebildet. Geringfügige Maßtoleranzen sind dabei möglich und gelten in diesen Grenzen ebenfalls als konstant und gleich.

Nach dem Ausbilden der Schweißnaht 2 und dem damit verbundenen Bilden des Bandkörpers 3 ist die Schweißnaht 2 zumeist einem Nachbearbeitungsvorgang zu unterziehen. Dabei wird die Schweißnaht 2, insbesondere deren Schweißraupe, zumindest bis auf die Bandstärke 7 abgetragen und damit eingeebnet. Die Nachbearbeitung kann dabei auf zumindest einer der Bandseiten, bevorzugt jedoch an beiden Bandseiten, nämlich der Bandaußenfläche 5 und der Bandinnenfläche 6 erfolgen.

Für den Einsatzzweck des Endlosbandes 1, insbesondere für die Herstellung von Kunststofffolien, ist zumindest der Bereich oder Abschnitt der zumindest einen Schweißnaht 2 soweit abzudecken, dass sich die Schweißnaht 2 nicht an der hergestellten oder herzustellenden Kunststofffolie abbildet bzw. einen Abdruck an dieser hinterlässt.

Es ist noch angedeutet, dass zumindest eine Schicht 8 aus einem zweiten metallischen Werkstoff vorgesehen ist. Im vorliegenden Ausführungsbeispiel ist in der Fig. 1 gezeigt, dass nicht nur die Schweißnaht 2 von der zumindest einen Schicht 8 abgedeckt ist, sondern die gesamte Bandaußenfläche 5. In dem von der Schicht 8 freigestellten Bereich ist noch angedeutet, dass auch nur die Schweißnaht 2 von der zumindest einen Schicht 8 abgedeckt sein kann.

Die zumindest eine metallische Schicht 8 ist ihrerseits zumindest auf der Bandaußenfläche 5 angeordnet oder auf dieser aufgebracht. Weiters haftet die zumindest eine Schicht 8 an der Bandaußenfläche 5 an bzw. ist diese mit der Bandaußenfläche 5 verbunden. Der zweite metallische Werkstoff der zumindest einen Schicht 8 weist einen zweiten Härtewert auf, welcher jedoch geringer ist als der erste Härtewert des Bandkörpers 3. Damit ist die zumindest eine Schicht 8 "weicher" als der erste Werkstoff des Bandkörpers 3. Der Bandkörper 3 dient für die zumindest eine Schicht 8 als Tragkörper. Das Endlosband 1 kann somit auch als mehrschichtiges Band bezeichnet werden.

Die jeweiligen Härtewerte der metallischen Werkstoffe können nach den aus dem Stand der Technik bekannten Verfahren mit den dazu vorgesehenen Vorrichtung oder Hilfsmitteln festgestellt oder ermittelt werden. Die Härtewerte der metallischen Werkstoffe können z.B. jeweils nach Martens, Rockwell, Brinell, Vickers, Shore oder Mohs ermittelt und/oder angegeben werden. Bei der Wahl eines Stahlwerkstoffes weist dieser z.B. einen ersten Härtewert nach Mohs von 4,5 auf.

Der zweite Werkstoff der metallischen Schicht 8 kann aus der Gruppe von Nickel (Ni), Kupfer (Cu), Silber (Ag), Gold (Au) ausgewählt sein. Je nach gewähltem zweiten Werkstoff kann der Beschichtungsvorgang bzw. das Aufbringen der zumindest einen Schicht 8 durch eine Elektro-Abscheideverfahren, auf einer chemischen und/oder elektrochemischen Basis erfolgen, wie dies allgemein bekannt ist. Wird als zweiter Werkstoff der metallischen Schicht 8 z.B. Nickel (Ni) gewählt, weist dieser einen zweiten Härtewert nach Mohs von 4,0 auf.

Die Bandstärke 7 des Bandkörpers 3 kann mit einem Stärkewert ausgebildet sein, der aus einem Stärke-Wertebereich stammt, dessen untere Grenze 0,10 mm, insbesondere 0,25 mm, und dessen obere Grenze 1,00 mm, bevorzugt 0,50 mm, beträgt. Ein bevorzugter Stärkewert der Bandstärke 7 des Bandkörpers 3 kann 0,30 mm betragen. Die Bandbreite 4 des Bandkörpers 3 kann mit einem Breitenwert ausgebildet sein, der aus einem Breiten-Wertebereich stammt, dessen untere Grenze 0,6 m und dessen obere Grenze 1,5 m beträgt. Weiters kann der Bandkörper 3 mit einer Umfangslänge mit einem Umfangslängenwert ausgebildet sein, der aus einem Umfangslängen-Wertebereich stammt, dessen untere Grenze 1,0 m und dessen obere Grenze 20,0 m beträgt. Bevorzugt kann die Umfangslänge des Bandkörpers 3 z.B. 1,25 m betragen. Es kann der Bandkörper 3 z.B. auch eine Breitenabmessung von 1,05 m bei einer Umfangslänge von 1,25 m aufweisen.

Unabhängig davon könnte aber das Verhältnis der Umfangslänge bezogen auf die Bandbreite 4 des Bandkörpers 3 einen Verhältniswert aufweisen, der aus einem Verhältnis-Wertebereich stammt, dessen untere Grenze 1,0 und dessen obere Grenze 1,5 beträgt. Damit wird ein in Richtung der Längserstreckung relativ kurzes Endlosband 1 bei dazu relativ großer Bandbreite 4 gebildet.

Die zuvor beschriebene zumindest eine Schicht 8 aus dem zweiten metallischen Werkstoff ist bevorzugt vollflächig auf der Bandaußenfläche 5 des Bandkörpers 3 angeordnet oder ausgebildet. Die Schichtstärke der zumindest einen metallischen Schicht 8 kann mit einem Stärkewert ausgebildet sein, der aus einem Stärke-Wertebereich stammt, dessen untere Grenze 40 µm, insbesondere 50 µm, und dessen obere Grenze 80 µm, bevorzugt 60 µm, beträgt.

Weiters ist vorgesehen, dass eine vom Bandkörper 3 abgewendete Oberfläche 9 der zumindest einen metallischen Schicht 8 mit einer gemittelte Rautiefe Rz mit einem Rautiefenwert ausgebildet ist bzw. wird, der aus einem Rautiefen-Wertebereich stammt, dessen untere Grenze 20 µm, insbesondere 25 µm, und dessen obere Grenze 40 µm, bevorzugt 35 µm, beträgt. Bevorzugt beträgt die gemittelte Rautiefe Rz der Oberfläche 9 z.B. 30 µm. Die Rauheit ist ein Begriff aus der Oberflächenphysik, der die Unebenheit der Oberflächenhöhe bezeichnet. Diese Unebenheit an der Oberfläche 9 der Schicht 8 und gegebenenfalls an der nicht von der Schicht 8 abgedeckten Bandaußenfläche 5 kann auch als Struktur bezeichnet werden. Die zumindest eine metallische Schicht 8 kann so angeordnet sein oder werden, dass diese zumindest die Schweißnaht 2 abdeckt. Je mehr an Flächenanteil der Bandaußenfläche 5 von der Schicht 8 abgedeckt ist, desto weniger Oberflächenanteil an verbleibendem Bandkörper 3 ist gegebenenfalls mit der Unebenheit oder der Struktur in den angegebenen Grenzen zu behandeln oder zu bearbeiten.

Unabhängig davon wäre es aber auch noch möglich, dass nur die Schweißnaht 2 von der metallischen Schicht 8 abgedeckt ist.

Um eine sehr glatte Oberfläche und damit eine sehr hohe Oberflächenqualität an der Bandaußenfläche 5 und/oder der Oberfläche 9 der Schicht 8 zu erzielen, kann ein Poliervorgang durchgeführt werden. In diesem Fall ist oder wird zumindest die vom Bandkörper 3 abgewendete Oberfläche 9 der zumindest einen metallischen Schicht 8 mit einer gemittelte Rautiefe Rz mit einem Rautiefenwert ausgebildet, der aus einem Rautiefen-Wertebereich stammt, dessen untere Grenze 0,02 µm, insbesondere 0,5 µm, und dessen obere Grenze 5,5 µm, bevorzugt 2,0 µm, beträgt. Ist die Schicht 8 nur abschnittsweise vorgesehen, kann auch die verbleibende Bandaußenfläche 5 des Bandkörpers 3 mit den zuvor beschriebenen Rautiefenwerten versehen werden, insbesondere poliert werden.

Die Herstellung und damit das Verfahren zur Herstellung des zuvor beschriebenen Endlosbandes 1 kann zumindest folgende Schritte umfassen:
- Bereitstellen eines Flachmaterials aus einem ersten metallischen Werkstoff, insbesondere aus einem Stahlwerkstoff, wobei das Flachmaterial mittels zumindest einer Schweißnaht 2 zu dem endlosen Bandkörper 3 zusammengefügt wird,
- wobei der Bandkörper 3 die Bandaußenfläche 5 und die Bandinnenfläche 6 aufweist oder definiert,
- wobei die Bandaußenfläche 5 in der Bandstärke 7 von der Bandinnenfläche 6 beabstandet angeordnet ist,
- wobei die zumindest eine Schweißnaht 2 zumindest bis auf die Bandstärke 7 abgetragen wird, und
- wobei der erste metallische Werkstoff des Bandkörpers 3 einen ersten Härtewert aufweist, und dabei weiters vorgesehen ist
- dass zumindest eine Schicht 8 aus einem zweiten metallischen Werkstoff auf der Bandaußenfläche 5 anhaftend an dieser angeordnet wird,
- dass der zweite metallische Werkstoff der zumindest einen Schicht 8 mit einem zweiten Härtewert gewählt wird, welcher zweite Härtewert geringer ist als der erste Härtewert des Bandkörpers 3, und
- dass zumindest die Schweißnaht 2 von der zumindest einen metallischen Schicht 8 abgedeckt wird.

Zur Bildung der strukturierten Oberfläche 9 der zumindest einen metallischen Schicht 8 mit den zuvor angegebenen Rautiefen Rz ist ein Behandlungsvorgang durchzuführen. Dies kann z.B. mittels eines Bürstvorgangs, eines Schleifvorgangs, eines Prägevorgangs, eines Strahlvorgangs, einer Laserbearbeitung, eines Graviervorgangs oder durch chemische Behandlungsvorgänge, wie z.B. Ätzen, durchgeführt werden. Es können auch die zuvor genannten Behandlungsvorgänge miteinander kombiniert und auch mehrfach durchgeführt werden.

Die Fig. 2 zeigt einen Querschnitt der zuvor beschriebenen zumindest einen Schweißnaht 2 zur gegenseitigen Verbindung von einander zugewendeten Stirnseiten des Flachmaterials und der damit einhergehenden Ausbildung des endlosen Bandkörpers 3.

Die beim Schweißvorgang gebildete Schweißraupe wird nach der Beendigung des Schweißvorganges eingeebnet. Dies kann. z.B. mittels eines Schleifvorganges oder einem anderen Abtragverfahren erfolgen. Zumeist kommt es im Bereich der verbliebenen Schweißnaht 2 zur Ausbildung einer Vertiefung oder Senke. Um einen ebenflächigen Übergang zwischen den beiden beidseits der Schweißnaht 2 befindlichen Bandaußenflächen 5 zu erreichen bzw. zu erzielen, kann nach dem Abtragen der zumindest einen Schweißnaht 2 und noch vor dem Anordnen oder dem Aufbringen der zumindest einen Schicht 8 aus dem zweiten metallischen Werkstoff eine Ausgleichsschicht 10 bevorzugt aus demselben zweiten metallischen Werkstoff wie die zumindest eine Schicht 8 auf der verbliebenen Schweißnaht 2 aufgebracht werden. Die Ausgleichsschicht 10 kann z.B. bereits nach dem Anordnen oder Aufbringen ebenflächig bezüglich der beiden beidseits der Schweißnaht 2 befindlichen Bandaußenflächen 5 ausgebildet sein. Es kann aber auch ein Nachbearbeitungsvorgang zur Einebnung der Ausgleichsschicht 10 bezüglich der beidseits der Schweißnaht 2 befindlichen Bandaußenflächen 5 durchgeführt werden.

Ist die Ausgleichsschicht 10 angeordnet und gegebenenfalls auch ebenflächig zu den beiden beidseits der Schweißnaht 2 befindlichen Bandaußenflächen 5 ausgebildet, kann die zumindest eine Schicht 8 aus dem zweiten metallischen Werkstoff aufgebracht oder angeordnet werden, wie dies zuvor bereits beschrieben worden ist. Die Schicht 8 kann die Ausgleichsschicht 10 überdecken, wobei aber auch eine jeweils an die Ausgleichsschicht 10 unmittelbar anschließende Anordnung möglich ist. Dies ist in der Fig. 2 in vollen Linien dargestellt.

Es wäre auch noch möglich, dass die Ausgleichsschicht 10 auch im Bereich der Bandinnenfläche 6 auf der Schweißnaht 2 zur Einebnung oder Herstellung der Ebenflächigkeit angeordnet oder aufgebracht wird.

In der Fig. 3 ist ein mögliches Anwendungsbeispiel für das zuvor beschriebene Endlosband 1 gezeigt. Das Endlosband 1 kann z.B. mit zumindest einer Kalanderrolle 11 oder zumindest einer Kalanderwalze zusammenwirken. Dazu wird das Endlosband 1 in dessen beiden Endabschnitten an nicht näher bezeichneten Umlenkwalzen oder Umlenkrädern umgelenkt, wobei auch ein Antrieb für zumindest eine der Umlenkwalzen oder zumindest eines der Umlenkrädern vorgesehen sein kann.

Der zur Herstellung der Kunststofffolie eingesetzte bzw. bereitgestellte Werkstoff wird in einem fließfähigen Aggregatzustand zwischen das Endlosband 1 und die Kalanderrolle 11 eingebracht, wie dies schematisch angedeutet ist. Dabei erfolgen eine gleichmäßige Verteilung des Kunststoffwerkstoffs sowie eine Verfestigung desselben zur Kunststofffolie. Nach dem Verlassen bzw. dem Austritt kann die so hergestellte Kunststofffolie abgezogen und/oder auf einem Transportband abgelegt werden. Nachfolgend kann das Folienmaterial z.B. zu einer Rollenware aufgewickelt werden. Als Kunststoffwerkstoffe können grundsätzlich alle Thermoplaste, wie z.B. Polypropylen (PP), Polyethylen (PE), Thermoplastische Elastomere (TPE), Polymethylmethacrylat (PMMA), Polycarbonat (PC), Polyethylenterephthalat (PET), Polystyrol (PS). Polyetheretherketon (PEEK), Polyvinylchlorid (PVC) zur Folienbildung verwendet werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Endlosband
- 2: Schweißnaht
- 3: Bandkörper
- 4: Bandbreite
- 5: Bandaußenfläche
- 6: Bandinnenfläche
- 7: Bandstärke
- 8: Schicht
- 9: Oberfläche
- 10: Ausgleichsschicht
- 11: Kalanderrolle

## Patentansprüche

1. Verwendung eines Endlosbandes (1) aus einem Flachmaterial aus einem ersten metallischen Werkstoff, insbesondere aus einem Stahlwerkstoff, bei dem
- das Flachmaterial mittels zumindest einer Schweißnaht (2) zu einem endlosen Bandkörper (3) zusammengefügt ist,
- der Bandkörper (3) eine Bandaußenfläche (5) und eine Bandinnenfläche (6) aufweist,
- die Bandaußenfläche (5) in einer Bandstärke (7) von der Bandinnenfläche (6) beabstandet angeordnet ist,
- der erste metallische Werkstoff des Bandkörpers (3) einen ersten Härtewert aufweist,
- zumindest eine Schicht (8) aus einem zweiten metallischen Werkstoff vorgesehen ist,
- die zumindest eine metallische Schicht (8) zumindest auf der Bandaußenfläche (5) angeordnet ist und an der Bandaußenfläche (5) anhaftet,
- der zweite metallische Werkstoff der zumindest einen Schicht (8) einen zweiten Härtewert aufweist, welcher zweite Härtewert geringer ist als der erste Härtewert des Bandkörpers (3) und
- zumindest die Schweißnaht (2) von der zumindest einen metallischen Schicht (8) abgedeckt ist,
als Trägerband oder Prozessband für die Herstellung von Folienmaterial aus einem Kunststoffwerkstoff.

## Claims

1. A use of an endless belt (1) made of a flat material of a first metallic material, in particular of a steel material, wherein
- the flat material is joined together by means of at least one weld seam (2) to form an endless belt body (3),
- the belt body (3) has an outer belt surface (5) and an inner belt surface (6),
- the outer belt surface (5) is arranged being spaced apart from the inner belt surface (6) by a belt thickness (7),
- the first metallic material of the belt body (3) has a first hardness value,
- at least one layer (8) of a second metallic material is provided,
- the at least one metallic layer (8) is arranged at least on the outer belt surface (5) and adheres to the outer belt surface (5),
- the second metallic material of the at least one layer (8) has a second hardness value, which second hardness value is lower than the first hardness value of the belt body (3), and
- at least the weld seam (2) is covered by the at least one metallic layer (8),
as a carrier belt or process belt for the production of film material from a plastic material.

## Revendications

1. Utilisation d'une bande sans fin (1) à partir d'un matériau plat constitué d'un premier matériau métallique, en particulier d'un matériau en acier, dans laquelle
- le matériau plat est joint au moyen d'un cordon de soudure (2) pour former un corps de bande sans fin (3),
- le corps de bande (3) présente une surface extérieure de bande (5) et une surface intérieure de bande (6),
- la surface extérieure de bande (5) est agencée dans une épaisseur de bande (7) à distance de la surface intérieure de bande (6),
- le premier matériau métallique constituant le corps de bande (3) présente une première valeur de dureté,
- au moins une couche (8) en un second matériau métallique est prévue,
- la au moins une couche métallique (8) est agencée au moins sur la surface extérieure de bande (5) et adhère à la surface extérieure de bande (5),
- le second matériau métallique de la au moins une couche (8) présente une seconde valeur de dureté, cette seconde valeur de dureté étant inférieure à la première valeur de dureté du corps de bande (3), et
- la au moins une couche métallique (8) recouvre au moins le cordon de soudure (2),
en tant que bande de support ou bande de processus pour la fabrication d'un matériau en feuille à partir d'une matière plastique.
